# EUROPEAN PATENT SPECIFICATION

(11) **EP 3 196 959 B1**
(45) Date of publication and mention of the grant of the patent: **13.05.2020**
(21) Application number: 15841847.5
(22) Date of filing: 22.07.2015
(51) Int. Cl.: H01M 2/16, H01M 10/058, C09D 127/12, C09D 133/02, C09D 133/04

(54) **INTERMEDIATE LAYER, SEPARATOR/INTERMEDIATE LAYER LAMINATE, AND STRUCTURE FOR NONAQUEOUS ELECTROLYTE SECONDARY BATTERIES**
ZWISCHENSCHICHT, SEPARATOR-/ZWISCHENSCHICHTLAMINAT UND STRUKTUR FÜR SEKUNDÄRBATTERIEN MIT WASSERFREIEM ELEKTROLYT
COUCHE INTERMÉDIAIRE, STRATIFIÉ DE SÉPARATEUR/COUCHE INTERMÉDIAIRE, ET STRUCTURE POUR BATTERIES RECHARGEABLES À ÉLECTROLYTE NON AQUEUX

(30) Priority: 19.09.2014 JP 2014191590
(43) Date of publication of application: 26.07.2017
(73) Proprietor: Kureha Corporation, Chuo-ku Tokyo 103-8552 (JP)
(72) Inventor: INABA, Yusaku, Tokyo 103-8552 (JP); TOHMIYA, Naoko, Tokyo 103-8552 (JP); NAGASAWA, Yoshiyuki, Tokyo 103-8552 (JP); IGARASHI, Tamito, Tokyo 103-8552 (JP)
(74) Representative: BRP Renaud & Partner mbB Rechtsanwälte Patentanwälte Steuerberater
(86) International application number: PCT/JP2015/070878
(87) International publication number: WO 2016/042914

(56) References cited:
- WO-A1-2013/133074
- WO-A1-2014/185378
- JP-A- H06 172 452
- JP-A- 2008 041 504
- JP-A- 2008 098 055
- JP-A- 2012 104 291
- JP-A- 2012 227 066
- JP-A- 2013 051 076
- JP-A- 2015 076 350
- JP-A- 2015 076 351
- US-A- 5 739 234
- US-A1- 2002 197 536
- US-A1- 2010 285 254

## Description

### TECHNICAL FIELD

The present invention relates to an intermediate layer formed from an aqueous latex, a separator/intermediate layer laminate, and a structure for non-aqueous electrolyte secondary batteries.

### BACKGROUND ART

Advancements in electronics technology have been remarkable in recent years, and various devices have been reduced in size and weight. With these reductions in size and weight of electronic devices, there has been demand for decreased size and weight of the batteries that supply power to these devices. Non-aqueous electrolyte secondary batteries that use lithium are used as batteries that can attain high energy with low volume and mass. Additionally, use of non-aqueous electrolyte secondary batteries for the energy source of hybrid automobiles, electric vehicles, and the like has been proposed and their practical use has begun.

With non-aqueous electrolyte secondary battery applications expanding into fields such as tablet devices, smart phones, and automobiles, large capacity and large area have come to be demanded in non-aqueous electrolyte secondary batteries. For example, Patent Document 1 discloses a non-aqueous electrolyte secondary battery containing a laminate-type electrode in which large-area cathode plate and anode plate are laminated via a separator, and a specified non-aqueous electrolyte.
Patent Document 2 discloses a lithium polymer battery comprising a cathode, an anode and a porous separator disposed inbetween with a first electrolyte positioned at a first surface of said separator and in contact with the cathode and a second polymeric electrolyte positioned at a second surface of said separator and in contact with the anode, the second polymeric electrolyte comprising an aqueous solution of a vinylidene fluoride copoplymer.
Also Patent Document 3 relates to an electrode structure for a non-aqueous solvent-type secondary battery containing a vinylidene fluoride copolymer as a binder.

### CITATION LIST

### Patent Literature

Patent Document 1: Japanese Unexamined Patent Application Publication No. 2013-206724A
Patent Document 2: US Patent Application US 2002/197536 A1
Patent Document 3: US Patent US 5739234 A

### SUMMARY OF INVENTION

### Technical Problem

Typically, a structure for non-aqueous electrolyte secondary batteries has a cathode and an anode, and a separator for insulating the cathode from the anode is disposed therebetween. In a structure for non-aqueous electrolyte secondary batteries that have been enlarged in area to achieve larger capacity, the laminate containing the cathode, separator, and anode are distorted by just a small external force, and as a result, deviation or peeling between the cathode and the separator and/or between the anode and the separator tends to occur, and portions that do not contribute to charging and discharging tend to appear. As a result, there is risk that the desired capacity is difficult to obtain. For this reason, there has been a demand for a structure for non-aqueous electrolyte secondary batteries in which a cathode with a separator and an anode with the separator are strongly adhered.

An object of the present invention is to provide a structure for non-aqueous electrolyte secondary batteries in which at least one of a cathode with a separator and an anode with a separator are strongly adhered, an intermediate layer formed from an aqueous latex used to obtain the structure for non-aqueous electrolyte secondary batteries, and a separator/intermediate layer laminate.

### Solution to Problem

As a result of diligent research to achieve the above object, the present inventors discovered that the above object can be achieved by polymer particles containing a copolymer containing a structural unit derived from an unsaturated dibasic acid, and/or a structural unit derived from an unsaturated dibasic acid monoester, and a structural unit derived from a vinylidene fluoride-based monomer. The present inventors thereby achieved the present invention.

That is, an intermediate layer, provided in a structure for non-aqueous electrolyte secondary batteries having a cathode, an anode, and a separator laminated between the cathode and the anode,
the intermediate layer being provided in at least one of between the cathode and the separator and between the anode and the separator, the intermediate layer being formed from an aqueous latex, the aqueous latex comprising polymer particles dispersed in water, the polymer particles containing a copolymer comprising a structural unit derived from an unsaturated dibasic acid, and/or a structural unit derived from an unsaturated dibasic acid monoester, and a structural unit derived from a vinylidene fluoride-based monomer, wherein a ratio A_{1740 cm-1}/A_{3020 cm-1} of an absorbance A_{1740 cm-1} of an infrared absorption spectrum at 1740 cm⁻¹ and an absorbance A_{3020 cm-1} of an infrared absorption spectrum at 3020 cm⁻¹ of the polymer particles being not less than 0.10, and wherein the intermediate layer is configured such that a plurality of polymer particles are bonded together either directly or via a water-soluble polymer.

Preferably an average particle size of the polymer particles of the aqueous latex is not less than 50 nm and not greater than 700 nm.

It is preferable that the polymer particles of the aqueous latex are produced by emulsion polymerization.

In the separator/intermediate layer laminate according to the present invention, the intermediate layer is provided on at least one main surface of the separator. A structure for non-aqueous electrolyte secondary batteries according to the present invention comprises the separator/intermediate layer laminate as depicted above.

### Advantageous Effects of Invention

According to the present invention, a structure for non-aqueous electrolyte secondary batteries in which at least one of a cathode with a separator and an anode with a separator are strongly adhered, an intermediate layer formed from an aqueous latex used to obtain the structure for non-aqueous electrolyte secondary batteries, and a separator/intermediate layer laminate can be provided. The structure for non-aqueous electrolyte secondary batteries according to the present invention can efficiently and effectively achieve long capacity retention and enlarged area of a non-aqueous electrolyte secondary battery.

### Brief Description of Drawings

FIG. 1 is a graph obtained by measuring the IR spectra of powders derived from aqueous latexes obtained in examples and comparative examples.
FIG. 2 is a graph obtained by measuring 180° peel strength between the cathode and the coated separator and 180° peel strength between the coated separator and the anode in cathode/coated separator/anode laminates (i.e., cathode/intermediate layer/separator/intermediate layer/anode laminates) in examples and comparative examples.
FIG. 3 illustrates the test results of cycle testing of non-aqueous electrolyte secondary batteries obtained using the coated separators obtained in examples.

### Description of Embodiments

### Aqueous Latex

The aqueous latex contains polymer particles dispersed in water, the polymer particles containing a copolymer comprising a structural unit derived from an unsaturated dibasic acid, and/or a structural unit derived from an unsaturated dibasic acid monoester, and a structural unit derived from a vinylidene fluoride-based monomer, the aqueous latex being used in production of an intermediate layer to be provided in a structure for non-aqueous electrolyte secondary batteries having a cathode, an anode, and a separator laminated between the cathode and the anode, the intermediate layer being provided in at least one of between the cathode and the separator and between the anode and the separator. In the aqueous latex, one type of polymer particles may be used alone, or two or more types may be used in combination.

The polymer particles contain a copolymer containing a structural unit derived from an unsaturated dibasic acid, and/or a structural unit derived from an unsaturated dibasic acid monoester, and a structural unit derived from a vinylidene fluoride-based monomer. The above copolymer exhibits polar interaction arising from the carbonyl group of the structural unit derived from an unsaturated dibasic acid and/or the structural unit derived from an unsaturated dibasic acid monoester, and therefore has excellent adhesive strength with a substrate. Thus, the adhesive strength between the separator and the intermediate layer, the adhesive strength between the cathode and the intermediate layer, and the adhesive strength between the anode and the intermediate layer tend to be excellent when the aqueous latex according to the present invention, which contains polymer particles containing the above copolymer, is used in the production of an intermediate layer provided in a structure for non-aqueous electrolyte secondary batteries having a cathode, an anode, and a separator laminated between the cathode and the anode, the intermediate layer being provided in at least one of between the cathode and the separator and between the anode and the separator. In the polymer particles, one type of copolymer may be used alone, or two or more types may be used in combination.

As the unsaturated dibasic acid, ones having from 5 to 8 carbons are preferable. Examples of unsaturated dibasic acids include unsaturated dicarboxylic acids, and more preferably, (anhydrous) maleic acid and citraconic acid.

As the unsaturated dibasic acid monoester, ones having from 5 to 8 carbons are preferable. Examples of unsaturated dibasic acid monoesters include unsaturated dicarboxylic acid monoesters, and more preferably, monomethyl maleate, monoethyl maleate, monomethyl citraconate, monoethyl citraconate, and the like. One type of unsaturated dibasic acid monoester may be used alone, or two or more types may be used in combination.

The vinylidene fluoride-based monomer refered to herein can include vinylidene fluoride, vinyl fluoride, trifluoroethylene (TrFE), tetrafluoroethylene (TFE), chlorotrifluoroethylene (CTFE), hexafluoropropylene (HFP), and the like. One type of vinylidene fluoride-based monomer may be used alone, or two or more types may be used in combination.

As the molar ratio of vinylidene fluoride to other vinylidene fluoride-based monomers in the above copolymer, particularly in the case where the vinylidene fluoride-based monomer is a combination of vinylidene fluoride and hexafluoropropylene, tetrafluoroethylene, and/or chlorotrifluoroethylene, the molar ratio of vinylidene fluoride to hexafluoropropylene, tetrafluoroethylene, and/or chlorotrifluoroethylene is preferably from 100:0 to 80:20, more preferably from 99.5:0.5 to 85:15, and even more preferably from 99:1 to 90:10.

The above copolymer may also include a structural unit derived from a monomer other than an unsaturated dibasic acid, unsaturated dibasic acid monoester, or vinylidene fluoride-based monomer (also denoted as "other monomer" hereinafter). The other monomer is not particularly limited, but examples include fluorine-based monomers that are polymerizable with vinylidene fluoride-based monomers; hydrocarbon-based monomers such as ethylene and propylene; aromatic vinyl compounds such as styrene and α-methylstyrene; unsaturated nitrile compounds such as (meth)acrylonitrile; acrylic acid ester compounds; acrylamide compounds; epoxy group-containing unsaturated compounds such as glycidyl methacrylate; sulfone group-containing unsaturated compounds such as vinylsulfonic acid; carboxyl group-containing monomers other than unsaturated dibasic acids and unsaturated dibasic acid monoesters; and carboxylic acid anhydride group-containing monomers. One type of other monomer may be used alone, or two or more types may be used in combination.

The total content of structural units derived from an unsaturated dibasic acid and structural units derived from an unsaturated dibasic acid monoester in the above copolymer is preferably not less than 0.02 mol% and not greater than 5.0 mol%, more preferably not less than 0.05 mol% and not greater than 4.0 mol%, even more preferably not less than 0.07 mol% and not greater than 3.0 mol%, and most preferably not less than 0.1 mol% and not greater than 2.0 mol%, relative to a total of 100 mol% of all structural units.

The content of structural units derived from a vinylidene fluoride-based monomer in the above copolymer is preferably not less than 50 mol% and not greater than 99.98 mol%, more preferably not less than 80 mol% and not greater than 99.95 mol%, even more preferably not less than 85 mol% and not greater than 99.93 mol%, and most preferably not less than 90 mol% and not greater than 99.9 mol%, relative to a total of 100 mol% of all structural units. In particular, when the above copolymer is made up of a structural unit derived from an unsaturated dibasic acid, and/or a structural unit derived from an unsaturated dibasic acid monoester, and a structural unit derived from a vinylidene fluoride-based monomer, the content of structural units derived from a vinylidene fluoride-based monomer in the above copolymer is preferably not less than 95.0 mol% and not greater than 99.98 mol%, more preferably not less than 96.0 mol% and not greater than 99.95 mol%, even more preferably not less than 97.0 mol% and not greater than 99.93 mol%, and most preferably not less than 98.0 mol% and not greater than 99.9 mol%, relative to a total of 100 mol% of all structural units. Furthermore, when the above copolymer is made up of a structural unit derived from an unsaturated dibasic acid, and/or a structural unit derived from an unsaturated dibasic acid monoester, and a structural unit derived from a vinylidene fluoride-based monomer, and another monomer, the content of structural units derived from a vinylidene fluoride-based monomer in the above copolymer is preferably not less than 50 mol% and not greater than 98.98 mol%, more preferably not less than 80 mol% and not greater than 97.95 mol%, even more preferably not less than 85 mol% and not greater than 96.93 mol%, and most preferably not less than 90 mol% and not greater than 95.9 mol%, relative to a total of 100 mol% of all structural units.

When the above copolymer contains an other monomer, the content of structural units derived from the other monomer in the above copolymer is preferably not less than 1.0 mol% and not greater than 49.98 mol%, more preferably not less than 2.0 mol% and not greater than 19.95 mol%, even more preferably not less than 3.0 mol% and not greater than 14.93 mol%, and most preferably not less than 4.0 mol% and not greater than 9.9 mol%, relative to a total of 100 mol% of all structural units.

Examples of the fluorine-based monomers that are copolymerizable with vinylidene fluoride-based monomers include perfluoroalkyl vinyl ethers such as perfluoromethyl vinyl ether.

Preferable examples of the carboxyl group-containing monomers other than unsaturated dibasic acids and unsaturated dibasic acid monoesters include unsaturated monobasic acids and the like. Examples of unsaturated monobasic acids include acrylic acid, methacrylic acid, 2-carboxyethylacrylate, and 2-carboxyethylmethacrylate. Of these, acrylic acid, methacrylic acid, maleic acid, and citraconic acid are preferable as the carboxyl group-containing monomer other than unsaturated dibasic acids and unsaturated dibasic acid monoesters. Further examples of the carboxyl group-containing monomers other than unsaturated dibasic acids and unsaturated dibasic acid monoesters include acryloyloxyethyl succinic acid, methacryloyloxyethyl succinic acid, acryloyloxyethyl phthalic acid, methacryloyloxyethyl phthalic acid, acryloyloxypropyl succinic acid and the like.

A crosslinked copolymer may be used as the copolymer used in the present invention. When a crosslinked copolymer is used as the copolymer, a polyfunctional monomer may be used as the other monomer, and a crosslinking reaction may be performed using a polyfunctional monomer after an uncrosslinked polymer is obtained.

As the copolymer, copolymers that contain a structural unit derived from an unsaturated dibasic acid, and/or a structural unit derived from an unsaturated dibasic acid monoester, and a structural unit derived from a vinylidene fluoride-based monomer, and a structural unit derived from a fluorine-based monomer that is copolymerizable with a vinylidene fluoride-based monomer are preferable. Specifically, vinylidene fluoride (VDF)-TFE- monomethyl maleate (MMM) copolymers, VDF-TFE-HFP-MMM copolymers, VDF-HFP-MMM copolymers, VDF-CTFE-MMM copolymers, VDF-TFE-CTFE-MMM copolymers, VDF-HFP-CTFE-MMM copolymers, VDF-TFE-MA copolymers, VDF-TFE-HFP-MA copolymers, VDF-HFP-MA copolymers, VDF-CTFE-MA copolymers, VDF-TFE-CTFE-MA copolymers, and VDF-HFP-CTFE-MA copolymers are preferable, and VDF-TFE-HFP-MMM copolymers, VDF-HFP-MMM copolymers, VDF-CTFE-MMM copolymers, VDF-HFP-CTFE-MMM copolymers, VDF-TFE-HFP-MA copolymers, VDF-HFP-MA copolymers, VDF-CTFE-MA copolymers, and VDF-HFP-CTFE-MA copolymers are more preferable.

The method for obtaining the copolymer is not particularly limited, and examples include polymerization methods such as emulsion polymerization, soap-free emulsion polymerization, mini-emulsion polymerization, suspension polymerization, solution polymerization, bulk polymerization, and the like. Among them, a polymerization method by which the copolymer can be obtained as particles is preferable. When the copolymer is obtained in a form other than particles, a process such as pulverizing is required so that it can be used as polymer particles. Thus, as described above, a method by which a particulate-form copolymer, i.e., polymer particles containing the copolymer, can be obtained is preferably employed.

Examples of methods for obtaining polymer particles include emulsion polymerization, soap-free emulsion polymerization, mini-emulsion polymerization, and suspension polymerization, but emulsion polymerization, soap-free emulsion polymerization, and mini-emulsion polymerization are preferable because polymer particles of average particle size not greater than 1 µm are easily obtained, and emulsion polymerization is particularly preferable.

Emulsion polymerization is a method of obtaining polymer particles using a monomer, an emulsifier, water, and a polymerization initiator. The emulsifier may be a substance that can form micelles and can stably disperse the polymer particles that are produced. An ionic emulsifier, a non-ionic emulsifier, or the like may be used. A water-soluble peroxide, a water-soluble azo compound, or the like may be used as the polymerization initiator. A redox initiator such as ascorbic acid-hydrogen peroxide may be used.

Soap-free emulsion polymerization is a form of emulsion polymerization performed without using an ordinary emulsifier that is used when performing the emulsion polymerization described above. Polymer particles obtained by soap-free emulsion polymerization are preferable in that, for example, the emulsifier does not bleed out to the surface when the intermediate layer containing the polymer particles is formed, because the emulsifier does not remain in the polymer particles. Soap-free emulsion polymerization may be performed by replacing the emulsifier used in emulsion polymerization described above with a reactive emulsifier. In addition, when the monomers are dispersed, soap-free polymerization may be performed without using a reactive emulsifier.

A reactive emulsifier is a substance which has a polymerizable double bond in the molecule and acts as an emulsifier. When a reactive emulsifier is used, micelles are formed in the same manner as when the aforementioned emulsifier is present in the system in the initial stages of polymerization, but as the reaction progresses, the reactive emulsifier is consumed as a monomer, and the reactive emulsifier is ultimately almost completely absent in the free state in the reaction system.

Mini-emulsion polymerization is a method of performing polymerization by refining monomer droplets to a sub-micron size by applying a strong shearing force using an ultrasonic wave oscillator or the like. Mini-emulsion polymerization is performed by adding a hardly-soluble substance called a hydrohobe in order to stabilize the refined monomer oil droplets. In mini-emulsion polymerization, ideally, monomer oil droplets are polymerized, and each oil droplet transforms into a fine particle of the copolymer.

Suspension polymerization is a method of performing polymerization by dissolving a water-insoluble polymerization initiator in a water-insoluble monomer, suspending the mixture in water by mechanical mixing, and heating the mixture. In suspension polymerization, polymerization progresses in the monomer droplets so that a dispersed solution of polymer particles is obtained. The particle size of polymer particles obtained by suspension polymerization generally tends to be larger than the particle size of polymer particles obtained by emulsion polymerization, soap-free emulsion polymerization, and mini-emulsion polymerization. However, polymer particles of small particle size can be obtained by performing mixing accompanied by high-speed shearing in the above mechanical mixing to make the monomer droplets very fine, and by stabilizing the fine monomer droplets by optimizing the dispersion stabilizer.

Taking into consideration the fact that the emulsifier (also denoted as "surfactant" hereinafter) and the dispersant used in copolymer production and when dispersing the particles obtained in suspension polymerization or the like in water will remain inside the battery, a substance having good oxidation-reduction resistance is preferable. The aqueous latex according to the present invention may also include components added in the course of obtaining the polymer particles, such as the above emulsifier, dispersant, and the like.

The surfactant may be a non-ionic surfactant, a cationic surfactant, an anionic surfactant, an amphoteric surfactant, or two or more of these surfactants. The surfactant used in polymerization is preferably a surfactant that is used conventionally in the polymerization of polyvinylidene fluoride, such as perfluorinated, partially fluorinated, and non-fluorinated surfactants. Examples of anionic surfactants include sodium higher alcohol sulfates, sodium alkylbenzene sulfonates, sodium dialkyl sulfosuccinates, sodium alkyldiphenyl ether disulfonates, sodium polyoxyethylene alkyl ether sulfates, sodium polyoxyethylene alkylphenyl ether sulfates, and the like. Among these, sodium lauryl sulfate, sodium dodecylbenzene sulfonate, sodium polyoxyethylene alkyl ether sulfates, sodium polyoxyethylene alkylphenyl ether sulfates, and the like are preferable. Examples of non-ionic surfactants include polyoxyethylene alkyl ethers, polyoxyethylene alkylaryl ethers, polyxoyethylene fatty acid esters, polyoxyethylene sorbitan fatty acid esters, and the like. Examples of amphoteric surfactants include lauryl betaine, sodium hydroxyethyl imidazo phosphosulfate, sodium imidazo phosphosulfonate, and the like. Examples of cationic surfactants include alkyl pyridinium chlorides, alkyl trimethylammonium chlorides, dialkyl dimethylammonium chlorides, alkyl dimethylbenzylammonium chlorides, and the like. Examples of fluorine-based surfactants include perfluoroalkyl sulfonic acids and salts thereof, perfluoroalkyl carboxylic acids and salts thereof, perfluoroalkyl phosphoric acid esters, perfluoroalkyl polyoxyethylenes, perfluoroalkyl betaines, fluorine-based surfactants containing a fluorocarbon chain or fluoropolyether chain, and the like. Among these, a fluorine-based surfactant is preferably used.

Furthermore, examples of reactive emulsifiers include, but are not limited to, polyoxyalkylene alkenyl ethers, sodium alkylallyl sulfosuccinates, sodium methacryloyloxy polyoxypropylene sulfate esters, alkoxy polyethylene glycol methacrylates, sodium styrene sulfonates, sodium allylalkyl sulfonates, and the like.

As the dispersant, known dispersants may be used without particular limitation, examples of which include fluorine-based dispersants.

The polymerization conditions such as polymerization temperature when performing polymerization by any of the above methods may be set as desired. The ratio A_{1740 cm-1}/A_{3020 cm-1} of absorbance A_{1740 cm-1} of an infrared absorption spectrum at 1740 cm⁻¹ and absorbance A_{3020 cm-1} of an infrared absorption spectrum at 3020 cm⁻¹ of the polymer particles is not less than 0.10. Absorption at 1740 cm⁻¹ is due to the group represented by -CO-O-, and absorption at 3020 cm⁻¹ is due to the group represented by -CH₂-. In the copolymer, the group represented by -CO-O- is contained in the structural units derived from an unsaturated dibasic acid and/or the structural units derived from an unsaturated dibasic acid monoester, and the group represented by -CH₂- is contained in all structural units. Therefore, the ratio A_{1740 cm-1}/A_{3020 cm-1} reflects the proportion of the total of structural units derived from an unsaturated dibasic acid and structural units derived from an unsaturated dibasic acid monoester among all structural units in the copolymer.

The lower limit of the ratio A_{1740 cm-1}/A_{3020 cm-1} is more preferably not less than 0.12, and even more preferably not less than 0.15. When the lower limit is within the above range, it is easy to obtain a copolymer that contains sufficient structural units derived from an unsaturated dibasic acid and/or structural units derived from an unsaturated dibasic acid monoester. Thus, when the aqueous latex according to the present invention is used in the production of an intermediate layer to be provided in at least one of between the cathode and the separator and between the anode and the separator in a structure for non-aqueous electrolyte secondary batteries having a cathode, an anode, and a separator laminated between the cathode and the anode, the adhesive strength between the separator and the intermediate layer, the adhesive strength between the cathode and the intermediate layer, and the adhesive strength between the anode and the intermediate layer tend to be excellent.

The upper limit of the ratio A_{1740 cm-1}/A_{3020 cm-1} is preferably not greater than 5.0, more preferably not greater than 4.0, and even more preferably not greater than 3.0. When the upper limit is within the above range, it is easy to obtain the above copolymer without using an excessive amount of polymerization initiator because there is no need to add an excessive amount of unsaturated dibasic acid and/or unsaturated dibasic acid monoester when producing the copolymer. As a result, the amount of polymerization initiator mixed into the aqueous latex according to the present invention can be reduced, and the characteristics of the obtained non-aqueous electrolyte secondary battery do not tend to be diminished.

The lower limit of average particle size of the polymer particles used in the present invention is preferably not less than 50 nm, more preferably not less than 100 nm, and even more preferably not less than 150 nm. When the lower limit is within the above range, it is preferable because the air permeability of the intermediate layer produced using the aqueous latex according to the present invention and the air permeability of the laminate of the intermediate layer and the separator are easy to control.
The upper limit of average particle size of the polymer particles used in the present invention is preferably not greater than 700 nm, more preferably not greater than 600 nm, and even more preferably not greater than 500 nm. When the upper limit is within the above range, it is preferable because the thickness of the intermediate layer produced using the aqueous latex of the present invention is easy to control.
Note that the above average particle size is the cumulative average particle size determined by dynamic light scattering, and is measured using ELSZ-2 (manufactured by Otsuka Electronics Co., Ltd.).

The aqueous latex may be made up of the above polymer particles and water, but may also contain components other than the above particles and water (also denoted as "other components" hereinafter).

Examples of the above other components include water-soluble polymers, inorganic fillers, organic fillers, and the like. Use of water-soluble polymers is preferable from the perspectives of adhesiveness between the intermediate layer and the separator, adhesiveness between the intermediate layer and the electrodes, and adhesiveness of mutually contacting polymer particles. The other components may be dissolved or dispersed in the aqueous latex according to the present invention. For example, when a water-soluble polymer is used as an other component, the water-soluble polymer is typically dissolved in the aqueous latex. Furthermore, for example, when an inorganic filler or organic filler is used as an other component, the inorganic filler or organic filler is dispersed in the aqueous latex. Note that when a component having a high specific gravity such as an inorganic filler is included, it is preferable that the aqueous latex is used immediately after preparation to form the intermediate layer, and that it is redispersed beforehand.

It is preferable that a polymer having adhesiveness to the above polymer particles, the above electrodes, and the separator is used as the water-soluble polymer. Examples of the water-soluble polymer include cellulose compounds such as carboxymethyl cellulose (CMC), hydroxypropyl cellulose, and hydroxyethyl cellulose, and ammonium salts or alkali metal salts thereof; polycarboxylic acids such as polyacrylic acid (PAA), and alkali metal salts thereof; polyvinyl pyrrolidone (PVP); polyvinyl alcohol (PVA); and polyethylene oxide (PEO). From the perspective of battery use over a long period, carboxymethyl cellulose (CMC), polyvinyl alcohol (PVA), and the like are preferable.

As the inorganic filler, inorganic fillers and the like conventionally used when a resin film (intermediate layer) is provided between a cathode or anode and a separator in a non-aqueous electrolyte secondary battery may be used without limitation.

Examples of the inorganic filler include oxides such as silicon dioxide (SiO₂), alumina (Al₂O₃), titanium dioxide (TiO₂), calcium oxide (CaO), strontium oxide (SrO), barium oxide (BaO), magnesium oxide (MgO), zinc oxide (ZnO), and barium titanate (BaTiO₃); hydroxides such as magnesium hydroxide (Mg(OH)₂), calcium hydroxide (Ca(OH)₂), zinc hydroxide (Zn(OH)₂), and aluminum hydroxide (Al(OH)₃); carbonates such as calcium carbonate (CaCO₃); sulfates such as barium sulfate; nitrides; clay minerals; and the like. One type of these inorganic fillers may be used alone, or two or more types may be used.

From the perspectives of battery safety and coating stability, alumina, silicon dioxide, magnesium oxide, and zinc oxide are preferable as the inorganic filler.
The average particle size of the inorganic filler is preferably from 5 nm to 2 µm, and more preferably from 10 nm to 1 µm.

Commercially available products may be used as the inorganic filler used in the present invention. For example, AKP3000 (manufactured by Sumitomo Chemical Co., Ltd.), which is commercially available as high -purity alumina particles, and the like may be used.

From the perspective of improving coating characteristics, the aqueous latex according to the present invention may contain a non-aqueous medium other than water. Examples of the non-aqueous medium include amide compounds, hydrocarbons, alcohols, ketones, esters, amine compounds, lactones, sulfoxides, sulfone compounds, and the like. One or more types selected from these may be used. When a non-aqueous medium is used, the content thereof may be small, preferably not greater than 30 mass%, more preferably not greater than 10 mass%, and even more preferably not greater than 5 mass%, relative to the total amount of aqueous latex.

In the aqueous latex the content of polymer particles in 100 parts by mass of components other than water is preferably from 60 to 100 parts by mass, more preferably from 65 to 100 parts by mass, and even more preferably from 70 to 100 parts by mass.

The intermediate layer produced using the aqueous latex according to the present invention contains polymer particles containing the above copolymer. Thus, by using the aqueous latex according to the present invention, it is possible to form an intermediate layer having air permeability even without using an inorganic filler. When an inorganic filler is not used, the weight energy density of the obtained non-aqueous electrolyte secondary battery can be improved. When an inorganic filler is used, an effect of increasing safety, such as preventing short-circuits, can be expected due to the presence of the inorganic filler in the intermediate layer, even when exposed to high temperature such that the polymer particles that form the intermediate layer or the separator melt in the obtained non-aqueous electrolyte secondary battery.

When a water-soluble polymer is used, the content thereof is preferably from 0.01 to 20 parts by mass, more preferably from 0.01 to 15 parts by mass, and particularly preferably from 0.01 to 10 parts by mass, in 100 parts by mass of the aqueous latex according to the present invention.

When an inorganic filler and/or an organic filler is used, the content thereof is preferably from 0.01 to 40 parts by mass, more preferably from 0.01 to 35 parts by mass, and particularly preferably from 0.01 to 30 parts by mass, in 100 parts by mass of the aqueous latex according to the present invention.

In the aqueous latex when the total of the above aqueous latex is taken as 100 parts by mass, the content of water as a dispersion medium is preferably from 30 to 99 parts by mass, and more preferably from 35 to 98 parts by mass. When the content is in the above range, coating characteristics tend to be excellent for application of the aqueous latex according to the present invention to the substrates of the cathode, anode, separator, and the like.

Note that the above polymer particles may be used not only in the intermediate layer formed from the aqueous latex according to the present invention, but may be similarly used in the separator/intermediate layer laminate according to the present invention and the structure for non-aqueous electrolyte secondary batteries according to the present invention.

The aqueous latex is used in production of an intermediate layer to be provided in a structure for non-aqueous electrolyte secondary batteries having a cathode, an anode, and a separator laminated between the cathode and the anode, the intermediate layer being provided in at least one of between the cathode and the separator and between the anode and the separator. The cathode, the anode, the separator, the structure for non-aqueous electrolyte secondary batteries, and the intermediate layer are as described below.

### Structure for Non-Aqueous Electrolyte Secondary Batteries

The structure for non-aqueous electrolyte secondary batteries according to the present invention contains a cathode, an anode, and a separator laminated between the cathode and the anode, the structure containing an intermediate layer provided in at least one of between the cathode and the separator and between the anode and the separator, the intermediate layer containing polymer particles containing a copolymer comprising a structural unit derived from an unsaturated dibasic acid, and/or a structural unit derived from an unsaturated dibasic acid monoester, and a structural unit derived from a vinylidene fluoride-based monomer.

The configuration of the structure for non-aqueous electrolyte secondary batteries according to the present invention is the same as conventional structures for non-aqueous electrolyte secondary batteries except that an intermediate layer produced using the aqueous latex according to the present invention is provided in at least one of between the cathode and the separator and between the anode and the separator. Any cathode, separator, and anode including known ones may be used without limitation, provided that they can constitute a structure for non-aqueous electrolyte secondary batteries. In the above structure for non-aqueous electrolyte secondary batteries, the intermediate layer may be in direct contact with the cathode, anode, and/or separator, or another layer may be interposed between the intermediate layer and the cathode, anode, and/or separator. However, from the perspective of adhesive strength between the cathode and the intermediate layer, adhesive strength between the anode and the intermediate layer, and adhesive strength between the separator and the intermediate layer, it is preferable that the cathode and the intermediate layer are in direct contact, the anode and the intermediate layer are in direct contact, and the separator and the intermediate layer are in direct contact.

Note that in the present specification, cathode and anode may be denoted collectively as "electrodes," and cathode current collector and anode current collector may be denoted collectively as "current collectors."

### Cathode

The cathode of the structure for non-aqueous electrolyte secondary batteries according to the present invention is not particularly limited provided that it has a cathode active material that supports the cathode reaction and has a current collecting function, but in many cases, it is made up of a cathode mixture layer containing a cathode active material, and a cathode current collector which functions as a current collector and serves the purpose of holding the cathode mixture layer.

When the structure for non-aqueous electrolyte secondary batteries according to the present invention has the intermediate layer produced using the aqueous latex according to the present invention between the above cathode and the separator, the intermediate layer is preferably disposed between the above cathode mixture layer and the separator.

In the present invention, the cathode mixture layer contains a cathode active material and a binding agent, and may further contain a conductive agent as necessary. Here, the blending ratio of the cathode active material, the binding agent, and the conductive agent in the cathode mixture layer may be a general blending ratio used in non-aqueous electrolyte secondary batteries such as lithium-ion secondary batteries, but may be adjusted as appropriate according to the type of secondary battery.

The thickness of the cathode mixture layer is preferably from 20 to 250 µm.
The cathode active material used in the structure for non-aqueous electrolyte secondary batteries according to the present invention is not particularly limited provided that it acts as a cathode active material, and a known electrode active material for cathodes may be used.

Here, when the non-aqueous electrolyte secondary battery is a lithium-ion secondary battery, a lithium-based cathode active material containing at least lithium is preferable as a cathode active material that constitutes the cathode mixture layer.
Examples of lithium-based cathode active materials include composite metal chalcogen compounds represented by the general formula LiMY₂ (wherein M is at least one of transition metals such as Co, Ni, Fe, Mn, Cr, or V, and Y is a chalcogen element such as O or S), such as LiCoO2 or LNiₓCo₁,O₂ (0 ≤ x ≤ 1), composite metal oxides having a spinel structure such as LiMn₂O₄, and olivine-type lithium compounds such as LiFePO₄. A commercially available product may be used as the cathode active material.

The specific surface area of the cathode active material is preferably from 0.05 to 50 ₘ²/_{g}.
The specific surface area of the cathode active material can be determined by the nitrogen adsorption method.
The cathode active material that constitutes the structure for non-aqueous electrolyte secondary batteries according to the present invention is not limited to these, and may be selected as appropriate according to the type of secondary battery.

In the present invention, the cathode mixture layer may further contain a conductive agent as necessary. This conductive agent may be added when an active material with low electrical conductivity such as LiCoO₂ is used, with the objective of improving the conductivity of the cathode mixture layer. Examples of the conductive agent include carbonaceous materials such as carbon black, graphite fine powder, graphite fiber, and carbon nanotubes, and metal fine powders or metal fibers made of nickel, aluminum, or the like.

The above binding agent serves the purpose of binding the above cathode active material and the conductive agent.
Here, although the binding agent is not particularly limited, those widely used in conventional lithium-ion secondary batteries may be advantageously used. For example, fluorine-containing resins such as polytetrafluoroethylene, polyvinylidene fluoride, and fluorine rubber, mixtures of styrene-butadiene rubber and carboxymethyl cellulose, and thermoplastic resins such as polypropylene and polyethylene may be used, but for the cathode, polyvinylidene fluoride is preferable. The above fluorine-containing resin may be a vinylidene fluoride-based copolymer. The vinylidene fluoride-based copolymer may be a vinylidene fluoride-monomethyl maleate copolymer, or the like.

The above cathode current collector is not particularly limited provided that it has good conductivity such that it can supply electricity to outside the secondary battery and does not obstruct electrode reactions in the secondary battery.
Examples of the above cathode current collector include those generally used as cathode current collectors of non-aqueous electrolyte secondary batteries such as lithium-ion secondary batteries.

When the non-aqueous electrolyte secondary battery is a lithium-ion secondary battery, a cathode current collector made of aluminum or an alloy thereof is preferable, among which aluminum foil is preferable. The cathode current collector is not limited to those, and may be selected as appropriate according to the type of secondary battery. The thickness of the above cathode current collector is preferably from 5 to 100 µm.

The production method of the cathode made up of the above cathode current collector and cathode mixture layer is not particularly limited, and examples include a method of coating at least one side, and preferably both sides, of a current collector with a cathode mixture containing the components that constitute the cathode mixture layer, and drying the coated cathode mixture, to produce a cathode. The coating method is not particularly limited, but examples include methods of coating with a bar coater, a die coater, a comma coater, and the like. Drying after coating is performed, for example, at a temperature of 50 to 150°C for from 10 sec to 300 min. The pressure at the time of drying is not particularly limited, and drying is performed at atmospheric pressure or reduced pressure. Note that heat treatment may be additionally performed after drying. Furthermore, press treatment may be additionally performed instead of or after the above heat treatment. Press treatment is performed at, for example, 1 to 200 MPa-G. Performing press treatment is preferable because electrode density can be improved.

When preparing the above cathode mixture, the above cathode active material, binding agent, non-aqueous solvent, and conductive agent used as necessary may be mixed so as to result in a homogeneous slurry. The order of mixing is not particularly limited. Examples of the non-aqueous solvent used to disperse the cathode active material, conductive agent, and binding agent include N-methyl-2-pyrrolidone and the like. Examples of the binding agent when an aqueous solvent is used include particulate-form polyvinylidene fluoride-based polymers and the like.

### Separator

The separator of the structure for non-aqueous electrolyte secondary batteries according to the present invention is not particularly limited.

The separator used in the present invention is one that constitutes a structure for non-aqueous electrolyte secondary batteries, and serves the purpose of electrically insulating the cathode from the anode and holding the electrolyte solution in a non-aqueous electrolyte secondary battery obtained from the structure. The separator used in the present invention is not particularly limited, but examples include monolayer or multilayer porous films made from polyolefin-based polymers (e.g., polyethylene, polypropylene, and the like), polyester-based polymers (e.g., polyethylene terephthalate and the like), polyimide-based polymers (e.g., aromatic polyamide-based polymers, polyether imides, and the like), polyether sulfones, polysulfones, polyether ketones, polystyrenes, polyethylene oxides, polycarbonates, polyvinyl chlorides, polyacrylonitriles, polymethylmethacrylates, ceramics, and mixtures of at least two types thereof; non-woven fabrics; glass; paper; and the like. Note that the above polymer may be a modified polymer.

In particular, a porous film of polyolefin-based polymer (e.g., polyethylene, polypropylene, and the like) is preferable. Examples of polyolefin-based polymer porous films include a monolayer polypropylene separator, a monolayer polyethylene separator, and a polypropylene/polyethylene/polypropylene three-layer separator, which are commercially available under the brand name Celgard (registered trade name) from Polypore International, Inc., and the like. Note that the separator may have a treated surface, and it may be pre-coated with a layer of inorganic particles.

Note that the separator is preferably larger than the cathode and the anode in order to assure insulation between the cathode and anode.

### Anode

The anode of the structure for non-aqueous electrolyte secondary batteries according to the present invention is not particularly limited provided that it has an anode active material that supports the anode reaction and has a current collecting function, but in many cases, it is made up of an anode mixture layer containing an anode active material, and an anode current collector which functions as a current collector and serves the purpose of holding the anode mixture layer.

When the structure for non-aqueous electrolyte secondary batteries according to the present invention has the intermediate layer produced using the aqueous latex according to the present invention between the above anode and the separator, the intermediate layer is preferably disposed between the above anode mixture layer and the separator.

In the present invention, the anode mixture layer contains an anode active material and a binding agent, and may further contain a conductive agent as necessary.
Here, the blending ratio of the anode active material, the binding agent, and the conductive agent in the anode mixture layer may be a general blending ratio used in non-aqueous electrolyte secondary batteries such as lithium-ion secondary batteries, but may be adjusted as appropriate according to the type of secondary battery.

The thickness of the anode mixture layer is preferably from 20 to 250 µm.
The anode active material used in the structure for non-aqueous electrolyte secondary batteries according to the present invention is not particularly limited provided that it acts as an anode active material, and a known electrode active material for anodes may be used.

Here, examples of the anode active material that constitutes the anode mixture layer include carbon materials, metal/alloy materials, metal oxides, Si-based anode materials, Li-based anode materials such as lithium titanate, and the like, but among these, carbon materials are preferable.
Artificial graphite, natural graphite, non-graphitizable carbon, graphitizable carbon, and the like may be used as the above carbon materials. Furthermore, one type of carbon material may be used alone, or two or more types may be used.

When such a carbon material is used, the energy density of the battery can be increased.
Artificial graphite can be obtained, for example, by carbonizing an organic material, further performing heat treatment at a high temperature, and pulverizing and classifying the resulting mixture. The non-graphitizable carbon can be obtained by firing a material derived from a petroleum pitch at 1000 to 1500°C.

A commercially available product may be used as the anode active material.
The specific surface area of the anode active material is preferably from 0.3 to 10 m²/g. When the specific surface area is not greater than 10 m²/g, the amount of degradation of the electrolyte solution tends not to increase and the initial irreversible capacity tends not to increase.

The specific surface area of the anode active material can be determined by the nitrogen adsorption method.
However, the anode active material that constitutes the structure for non-aqueous electrolyte secondary batteries according to the present invention is not limited to these, and may be selected as appropriate according to the type of secondary battery.

In the present invention, the anode mixture layer may further contain a conductive agent as necessary. This conductive agent may be added with the objective of improving the conductivity of the anode mixture layer. Examples of the conductive agent include carbonaceous materials such as carbon black, graphite fine powder, carbon nanotubes, and graphite fiber, and metal fine powders or metal fibers made of nickel, aluminum, or the like.

The above binding agent serves the purpose of binding the above anode active material and the conductive agent.
Here, examples of the binding agent are the same as those stated in the above "Cathode" section, but polyvinylidene fluoride, mixtures of styrene-butadiene rubber and carboxymethyl cellulose, mixtures of polyvinylidene fluoride particles and carboxymethyl cellulose, and the like are preferable.

The above anode current collector is not particularly limited provided that it has good conductivity such that it can supply electricity to outside the secondary battery and does not obstruct electrode reactions in the secondary battery.
Examples of the above anode current collector include those generally used as anode current collectors of non-aqueous electrolyte secondary batteries such as lithium-ion secondary batteries.

Anode current collectors made of copper are preferable, among which copper foil is preferable. The anode current collector is not limited to those, and may be selected as appropriate according to the type of secondary battery. The thickness of the above anode current collector is preferably from 5 to 100 µm.

The production method of the anode made up of the above anode current collector and anode mixture layer is not particularly limited, and examples include a method of coating at least one side, and preferably both sides, of a current collector with an anode mixture containing the components that constitute the anode mixture layer, and drying the coated anode mixture, to produce an anode. As the method for preparing the anode mixture and the method for producing the anode, the same methods as the method for preparing the cathode mixture and the method for producing the cathode in the above "Cathode" section may be used.

### Intermediate Layer

The structure for non-aqueous electrolyte secondary batteries according to the present invention has an intermediate layer produced using the aqueous latex according to the present invention, the intermediate layer being provided in at least one of between the cathode and the separator and between the anode and the separator.

The structure for non-aqueous electrolyte secondary batteries according to the present invention has an intermediate layer produced using the aqueous latex according to the present invention, the intermediate layer being provided in at least one of between the cathode and the separator and between the anode and the separator, but the intermediate layer is preferably provided between the cathode and the separator and between the anode and the separator. When the structure for non-aqueous electrolyte secondary batteries according to the present invention has an intermediate layer produced using the aqueous latex according to the present invention provided between the cathode and the separator, it is preferable because the adhesive strength between the cathode and the intermediate layer tends to improve and the oxidation-reduction resistance of the separator improves. Furthermore, when the structure for non-aqueous electrolyte secondary batteries according to the present invention has an intermediate layer produced using the aqueous latex according to the present invention provided between the anode and the separator, the adhesive strength between the anode and the intermediate layer tends to improve.

The thickness of the intermediate layer is preferably from 0.2 to 25 µm, and more preferably from 0.5 to 5 µm.
The intermediate layer is formed mainly from polymer particles. When the intermediate layer is observed by SEM, it can preferably be ascertained that the polymer particles are present in a state where the particle shape is maintained. That is, in the structure for non-aqueous electrolyte secondary batteries according to the present invention, it is preferable that the polymer particles that constitute the intermediate layer are not melted and aggregated. The intermediate layer is preferably configured such that a plurality of polymer particles are bonded together either directly or via a water-soluble polymer. Additionally, the polymer particles do not have to be bonded together or bonded by a water-soluble polymer at the stage of the structure for non-aqueous electrolyte secondary batteries according to the present invention, and may be bonded by means of the particle surfaces being dissolved or swelled by the electrolyte solution injected when producing the non-aqueous electrolyte secondary battery from the structure for non-aqueous electrolyte secondary batteries.

When adhesive polymer particles are used as the polymer particles or when heat treatment has been performed under conditions where the vicinity of the particle surfaces melt in the course of forming the intermediate layer, the intermediate layer is preferably configured such that the polymer particles bond directly to each other. In this structure, each particle can be seen by SEM or the like, but the polymer particles are integrated due to bonding directly to each other.

When non-adhesive polymer particles are used as the polymer particles or when heat treatment is not performed in the course of forming the intermediate layer, the intermediate layer is preferably configured such that the polymer particles contact each other and are bonded by a water-soluble polymer. This structure is formed by producing the intermediate layer using a solution containing the above polymer particles, a water-soluble polymer, and the like. In the structure, each particle can be seen by SEM or the like, and water-soluble polymer is present between each of the particles.

The above intermediate layer may be formed by, for example, any one of methods (1) to (4) below.
(1) Forming the intermediate layer by coating at least one selected from a cathode, a separator, and an anode with the aqueous latex according to the present invention, and drying the aqueous latex.
(2) Forming the intermediate layer by immersing at least one selected from a cathode, a separator, and an anode in the aqueous latex according to the present invention, removing it from the aqueous latex, and drying the aqueous latex.
(3) Forming the intermediate layer by coating a substrate with the aqueous latex according to the present invention, drying the aqueous latex, and then peeling the formed coating film from the substrate.
(4) Forming the intermediate layer by immersing a substrate in the aqueous latex according to the present invention, removing it from the aqueous latex, drying the aqueous latex, and then peeling the formed coating film from the substrate.
Note that when the cathode, separator, or anode is coated with the aqueous latex according to the present invention, at least one surface (that is, one surface or both surfaces) may be coated.

Examples of the coating method include coating a substrate using a bar coater; a die coater; a comma coater; a gravure coater with the direct gravure method, the reverse gravure method, the kiss reverse gravure method, the offset gravure method, or the like; a reverse roll coater; a microgravure coater; an air knife coater; a dip coater; and the like, without particular limitation. It is preferable that the intermediate layer formed on the substrate is uniform, but a hole pattern or a dot pattern may be formed with the objective of releasing gas generated in the course of charging and discharging.

Furthermore, heat treatment may be performed as necessary after drying. When a water-soluble polymer is not used as the above other component, heat treatment is preferably performed.
A substrate made of polyethylene terephthalate (PET), for example, may be used as the above substrate.

When an intermediate layer obtained by peeling from a substrate is used, the intermediate layer is disposed between the cathode and the separator or between the anode and the separator after it is peeled from the substrate.

As for the temperature during drying, the melting and decomposition temperatures and the like of the separator, the electrodes, the substrate, the polymer particles, and the other components is required to be taken into consideration, and therefore the suitable time and temperature differ depending on the system, but is preferably from 40 to 190°C, and is more preferably from 50 to 180°C. The drying time is preferably from 1 s to 15 h.

As for the temperature during heat treatment, the melting and decomposition temperatures and the like of the separator, the electrodes, the substrate, the polymer particles, and the other components is required to be taken into consideration, and therefore the suitable time and temperature differ depending on the system, but is preferably from 60 to 220°C, and is more preferably from 65 to 215°C. The heat treatment time is preferably from 1 s to 15 h.

There is partial overlap in the conditions such as temperature in the above drying and heat treatment, but the above drying and heat treatment do not have to be distinctly differentiated and may be performed continuously.

The production method of the structure for non-aqueous electrolyte secondary batteries according to the present invention may be the same as conventional methods except that an intermediate layer produced using the aqueous latex according to the present invention is provided in at least one of between the cathode and the separator and between the anode and the separator. As described above, the production method of the structure for non-aqueous electrolyte secondary batteries according to the present invention is characterized in that the intermediate layer is formed by any one of methods (1) to (4) described above.

When the intermediate layer is formed on the separator or on an electrode, the structure for non-aqueous electrolyte secondary batteries according to the present invention may be produced by a method similar to a conventional method except that the separator on which the intermediate layer was formed or the electrode on which the intermediate layer was formed is used. When the intermediate layer is formed by peeling from a substrate, the structure for non-aqueous electrolyte secondary batteries according to the present invention may be produced by a method similar to a conventional method except that a step is required to dispose the intermediate layer in at least one of between the cathode and the separator and between the anode and the separator.

In the structure for non-aqueous electrolyte secondary batteries according to the present invention, the intermediate layer is produced using the aqueous latex according to the present invention. This is preferable because an electrolyte solution injection passage can be created in the intermediate layer without performing a perforation step.

In the structure for non-aqueous electrolyte secondary batteries according to the present invention and the non-aqueous electrolyte secondary battery to be described later, the adhesive strength between the separator and the intermediate layer, the adhesive strength between the cathode and the intermediate layer, and the adhesive strength between the anode and the intermediate layer tend to be excellent because the intermediate layer is produced using the aqueous latex according to the present invention. Thus, even if the structure for non-aqueous electrolyte secondary batteries according to the present invention and the non-aqueous electrolyte secondary battery to be described later has large area, gap or delamination between the cathode and the separator and/or between the anode and the separator due to external force do not readily occur, and battery performance can be maintained for a long period. Furthermore, the desired capacity is easily obtained.

### Separator/Intermediate Layer Laminate

The separator/intermediate layer laminate according to the present invention contains a separator for non-aqueous electrolyte secondary batteries and an intermediate layer provided on at least one main surface of the separator, the intermediate layer containing polymer particles containing a copolymer containing a structural unit derived from an unsaturated dibasic acid, and/or a structural unit derived from an unsaturated dibasic acid monoester, and a structural unit derived from a vinylidene fluoride-based monomer. In the above separator/intermediate layer laminate, the separator and the intermediate layer may be in direct contact, or another layer may be interposed between the separator and the intermediate layer.

The separator, the intermediate layer, and the polymer particles used in the separator/intermediate layer laminate according to the present invention are the same as those described above.

### Non-Aqueous Electrolyte Secondary Battery

The non-aqueous electrolyte secondary battery is obtained from the above structure for non-aqueous electrolyte secondary batteries.

Examples of battery structures of non-aqueous electrolyte secondary batteries include known battery structures such as a coin battery, button battery, cylindrical battery, square battery, and the like.

Examples of components that constitute a non-aqueous electrolyte secondary battery other than the above structure for non-aqueous electrolyte secondary batteries include a non-aqueous electrolyte solution, a cylindrical case, a laminate pouch, and the like.

The above non-aqueous electrolyte solution is obtained by dissolving an electrolyte in a non-aqueous solvent.
Examples of the non-aqueous solvent include aprotic organic solvents that are capable of transporting the cations and anions constituting the electrolyte and do not substantially diminish the function of the secondary battery. Examples of such non-aqueous solvents include organic solvents typically used as non-aqueous electrolyte solutions of lithium-ion secondary batteries, such as carbonates, hydrocarbon halides, ethers, ketones, nitriles, lactones, esters, oxolane compounds, and the like. Among these, propylene carbonate, ethylene carbonate, dimethylcarbonate, diethylcarbonate, ethylmethylcarbonate, 1,2-dimethoxyethane, 1,2-diethoxyethane, methyl propionate, ethyl propionate, succinonitrile, 1,3-propane sultone, fluoroethylene carbonate, vinylene carbonate, and the like are preferable. One type of non-aqueous solvent may be used alone, or two or more types may be used.

The type of electrolyte is not particularly limited provided that it is capable of transporting the constituent cations and anions via the above non-aqueous solvent and does not substantially diminish the function of the secondary battery. Here, when the non-aqueous electrolyte secondary battery is a lithium-ion secondary battery, examples of the electrolyte that can be used include lithium salts of fluoro complex anions such as LiPF₆, LiAsF₆, and LBF₄; inorganic lithium salts such as LiClO₄, LiCl, and LiBr; lithium sulfonate salts such as LiCH₃SO₃ and LiCF₃SO₃; and organic lithium salts such as Li(CF₃OSO₂)₂N, Li(CF₃OSO₂)₃C, Li(CF₃SO₂)₂N, and Li(CF₃SO₂)₃C. One type of electrolyte may be used alone, or two or more types may be used.

The non-aqueous electrolyte secondary battery is obtained from the above structure for non-aqueous electrolyte secondary batteries, but the adhesive strength of the intermediate layer of the above structure for non-aqueous electrolyte secondary batteries with the cathode and the anode may be increased by swelling it using the electrolyte solution injected when producing the battery, and additionally hot pressing it.
The temperature during hot pressing is preferably from room temperature to 160°C, and more preferably from 40 to 120°C. The pressure during hot pressing is preferably from 0.01 to 10 MPa, and more preferably from 0.1 to 8 MPa. The preheating time used when performing hot pressing is preferably from 1 s to 1 h, and the pressing time is preferably from 1 s to 1 h.
The non-aqueous electrolyte secondary battery described above can form electrodes having excellent adhesion of cathode-intermediate layer-separator and/or anode-intermediate layer-separator.

### Examples

The present invention will be illustratedin more detail below by means of the following examples, but the scope of present invention is not limited thereby.

### Production of Cathode

Lithium cobaltate (CELLSEED C5-H, manufactured by Nippon Chemical Industrial Co., Ltd.), a conductive agent (Super P, manufactured by TIMCAL Graphite & Carbon, Ltd.), and PVDF (polyvinylidene fluoride, KF#1100, manufactured by Kureha Corporation) in a mass ratio of 93:3:4 were mixed with N-methyl-2-pyrrolidone, to create a slurry with a 69 mass% solid content concentration. Aluminum foil was coated with this slurry using a 115 µm spacer, and it was then dried for 3 h at 120°C. It was then pressed, to produce a cathode having a bulk density of 3.6 g/cm³ and a basis weight of 150 g/m².

### Production of Anode

BTR918 (modified natural graphite, manufactured by BTR New Energy Materials Co.), a conductive agent (Super P, manufactured by TIMCAL Graphite & Carbon, Ltd.), SBR (styrene-butadiene rubber latex, BM-400, manufactured by Zeon Corporation), and CMC (carboxymethyl cellulose, Cellogen 4H, manufactured by Daiichi Kogyo Seiyaku Co., Ltd.) in a mass ratio of 90:2:3:1 were mixed with water, to create a slurry with a 53 mass% solid content concentration. Copper foil was coated with this slurry using a 90 µm spacer, and it was then dried for 3 h at 120°C. It was then pressed, to produce a cathode having a bulk density of 1.5 g/cm³ and a basis weight of 56 g/m².

### Example 1

First, 280 parts by mass of water was introduced into the autoclave, and after degassing, 0.5 parts by mass of ammonium salt of perfluorooctanoic acid (PFOA) and 0.05 parts by mass of ethyl acetate were added, and then 20 parts by mass of vinylidene fluoride (VDF) and 5 parts by mass of hexafluoropropylene (HFP) were introduced.

After heating to 80°C, 0.3 parts by mass of ammonium persulfate (APS) was introduced and the mixture was polymerized, and then 75 parts by mass of VDF and 0.3 parts by mass of monomethyl maleate (MMM) were introduced. At that time, the mono methyl maleate was used in the form of a 3 mass% aqueous solution, and each time 5 parts by mass of VDF was consumed, the above aqueous solution was charged in an amount equivalent to 0.02 parts by mass as monomethyl maleate. When the internal pressure dropped to 1.5 MPa, the polymerization reaction was considered complete, and a VDF-HFP-MMM copolymer latex was obtained.

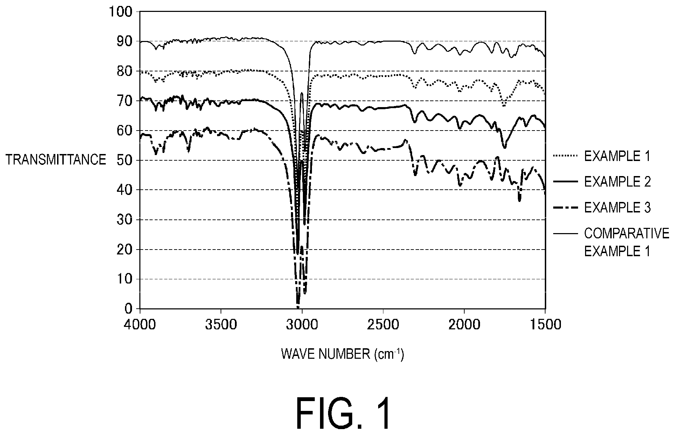

The obtained VDF-HFP-MMM copolymer latex was dried for 3 h at 80°C. When the resin concentration was measured, it was 22.7 mass%. Furthermore, when the average particle size was determined using ELSZ-2 manufactured by Otsuka Electronics Co., Ltd., it was 187 nm. The obtained latex was salted out with 0.5 mass% calcium chloride aqueous solution, and after the obtained slurry was washed twice with water, it was dried for 21 h at 80°C, to produce a powder. The obtained powder was pressed at 200°C, and when the IR spectrum was measured, the absorbance ratio (A_{1740 cm-1}/A_{3020 cm-1}) was 0.16. The IR spectrum measurement results are shown in FIG. 1.

The obtained VDF-HFP-MMM copolymer latex and CMC (Cellogen 4H, manufactured by Daiichi Kogyo Seiyaku Co., Ltd.) and water were mixed so as to result in a mass ratio of VDF-HFP-MMM copolymer:CMC = 95:5 and a solid content concentration of 8.2 mass%. Both surfaces of a separator (Hipore ND420, manufactured by Asahi Kasei Corporation) were sequentially coated with the obtained aqueous dispersion using a wire bar to obtain a wet coated quantity of 36 g/m², and both surfaces were dried for 10 min at 70°C. When the air permeability of the obtained coated separator (i.e., intermediate layer/separator/intermediate layer laminate) was measured using a Gurley densometer (manufactured by Toyo Seiki Seisaku-sho, Ltd.), it was 432 s/100 mL. The air permeability of the separator before coating (Hipore ND420) was 320 s/100 mL. The thickness of the coating film on one side was 0.7 µm.

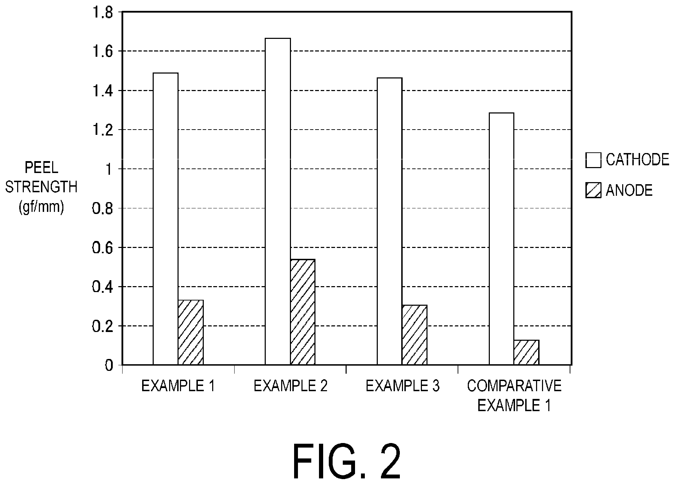

The above cathode and anode were cut to 2.5 cm × 5.0 cm, and the obtained coated separator was cut to 3.0 cm × 6.0 cm. The cathode, the coated separator, and the anode were overlaid in that order, and 100 mg of an electrolyte solution (ethylene carbonate/dimethylcarbonate/ethylmethylcarbonate (volume ratio) = 1/2/2, LiPF₆: 1.3 M) was made to penetrate in, and then it was sealed by vacuum degassing in an aluminum pouch using a vacuum sealer. Then, after residual heating for 3 min at 100°C, it was hot pressed for 1 min at approximately 4 MPa. In the obtained cathode/coated separator/anode laminate (i.e., cathode/intermediate layer/separator/intermediate layer/anode laminate), the 180° peel strength between the cathode and the coated separator and the 180° peel strength between the coated separator and the anode were measured using a Tensile Universal Testing Machine (manufactured by A&D Co., Ltd.). The 180° peel strength between the cathode and the coated separator was 1.48 gf/mm, and the 180° peel strength between the coated separator and the anode was 0.33 gf/mm. The above peel strength measurement results are shown in FIG. 2.

### Example 2

A VDF-HFP-MMM copolymer latex was obtained in the same manner as Example 1 except that the introduced amount of ammonium persulfate was changed from 0.3 parts by mass to 0.5 parts by mass, the added amount of monomethyl maleate was changed from 0.3 parts by mass to 0.5 parts by mass, the concentration of monomethyl maleate aqueous solution was changed from 3 mass% to 5 mass%, and the charged amount of the above aqueous solution was changed from 0.02 parts by mass to 0.033 parts by mass as monomethyl maleate. When the resin concentration, average particle size, and absorbance ratio were measured in the same manner as Example 1, the resin concentration was 23.8 mass%, the average particle size was 187 nm, and the absorbance ratio (A_{1740 cm-1}/A_{3020 cm-1}) was 0.21. The IR spectrum measurement results are shown in FIG. 1.

A coated separator was obtained in the same manner as Example 1 using the obtained VDF-HFP-MMM copolymer latex. When the air permeability of the coated separator was measured in the same manner as Example 1, it was 478 s/100 mL. The thickness of the coating film on one side was 1.0 µm.

The 180° peel strength between the cathode and the coated separator and the 180° peel strength between the coated separator and the anode were measured in the same manner as Example 1. The 180° peel strength between the cathode and the coated separator was 1.66 gf/mm, and the 180° peel strength between the coated separator and the anode was 0.54 gf/mm. The above peel strength measurement results are shown in FIG. 2.

### Comparative Example 1

A VDF-HFP copolymer latex was obtained in the same manner as Example 1 except that the introduced amount of ammonium persulfate was changed from 0.3 parts by mass to 0.06 parts by mass, and monomethyl maleate was not charged. When the resin concentration, average particle size, and absorbance ratio were measured in the same manner as Example 1, the resin concentration was 24.6 mass%, the average particle size was 195 nm, and the absorbance ratio (A_{1740 cm-1}/A_{3020 cm-1}) was 0.06. The IR spectrum measurement results are shown in FIG. 1.

A coated separator was obtained in the same manner as Example 1 using the obtained VDF-HFP copolymer latex. When the air permeability of the coated separator was measured in the same manner as Example 1, it was 405 s/100 mL. The thickness of the coating film on one side was 0.7 µm.

The 180° peel strength between the cathode and the coated separator and the 180° peel strength between the coated separator and the anode were measured in the same manner as Example 1. The 180° peel strength between the cathode and the coated separator was 1.28 gf/mm, and the 180° peel strength between the coated separator and the anode was 0.12 gf/mm. The above peel strength measurement results are shown in FIG. 2.

### Evaluation

The absorbance ratio (A_{1740 cm-1}/A_{3020 cm-1}) in Example 1 and Example 2, in which latex was obtained using mono methyl maleate, was not less than 0.10. In contrast, the absorbance ratio (A_{1740 cm-1}/A_{3020 cm-1}) in Comparative Example 1, in which latex was obtained without using monomethyl maleate, was less than 0.10.

Furthermore, in Example 1 and Example 2, the 180° peel strength between the cathode and the coated separator and the 180° peel strength between the coated separator and the anode were both higher than that in Comparative Example 1, and the improvement in 180° peel strength between the coated separator and the anode was particularly remarkable.

### Example 3

First, 280 parts by mass of water was introduced into the autoclave, and after degassing, 0.5 parts by mass of ammonium salt of perfluorooctanoic acid (PFOA) and 0.05 parts by mass of ethyl acetate were introduced, and then 20 parts by mass of vinylidene fluoride (VDF) and 5 parts by mass of hexafluoropropylene (HFP) were introduced.

After heating to 80°C, 0.1 parts by mass of ammonium persulfate (APS) was introduced and the mixture was polymerized, and then 75 parts by mass of VDF and 0.06 parts by mass of maleic acid (MA) were charged. At that time, the maleic acid was used in the form of a 5 mass% aqueous solution, and at the points when the cumulative added amount of VDF reached 65, 70, and 75 parts by mass, the above aqueous solution was added in an amount equivalent to 0.02 parts by mass as maleic acid. When the internal pressure dropped to 1.5 MPa, the polymerization reaction was considered complete, and a VDF-HFP-MA copolymer latex was obtained.

The obtained VDF-HFP-MA copolymer latex was dried for 3 h at 80°C. When the resin concentration was measured, it was 22.9 mass%. Furthermore, when the average particle size was determined using ELSZ-2 manufactured by Otsuka Electronics Co., Ltd., it was 185 nm. The obtained latex was salted out with 0.5 mass% calcium chloride aqueous solution, and after the obtained slurry was washed twice with water, it was dried for 21 h at 80°C, to produce a powder. The obtained powder was pressed at 200°C, and when the IR spectrum was measured, the absorbance ratio (A_{1740 cm-1}/A_{3020 cm-1}) was 0.13. The IR spectrum measurement results are shown in FIG. 1.

The obtained VDF-HFP-MA copolymer latex and CMC (Cellogen 4H, manufactured by Daiichi Kogyo Seiyaku Co., Ltd.) and water were mixed so as to result in a mass ratio of VDF-HFP-MA copolymer:CMC = 95:5 and a solid content concentration of 8.9 mass%. Both surfaces of a separator (Hipore ND420, manufactured by Asahi Kasei Corporation) were sequentially coated with the obtained aqueous dispersion using a wire bar to obtain a wet coated quantity of 36 g/m², and both surfaces were dried for 10 min at 70°C. When the air permeability of the obtained coated separator was measured using a Gurley densometer (manufactured by Toyo Seiki Seisaku-sho, Ltd.), it was 410 s/100 mL. The thickness of the coating film on one side was 0.6 µm.

The above cathode and anode were cut to 2.5 cm × 5.0 cm, and the obtained coated separator was cut to 3.0 cm × 6.0 cm. The cathode, the coated separator, and the anode were overlaid in that order, and 100 mg of an electrolyte solution (ethylene carbonate/dimethylcarbonate/ethylmethylcarbonate (volume ratio) = 1/2/2, LiPF₆: 1.3 M) was made to penetrate in, and then it was sealed by vacuum degassing in an aluminum pouch using a vacuum sealer. Then, after residual heating for 3 min at 100°C, it was hot pressed for 1 min at approximately 4 MPa. In the obtained cathode/coated separator/anode laminate (i.e., cathode/intermediate layer/separator/intermediate layer/anode laminate), the 180° peel strength between the cathode and the coated separator and the 180° peel strength between the coated separator and the anode were measured using a Tensile Universal Testing Machine (manufactured by A&D Co., Ltd.). The 180° peel strength between the cathode and the coated separator was 1.46 gf/mm, and the 180° peel strength between the coated separator and the anode was 0.30 gf/mm. The above peel strength measurement results are shown in FIG. 2.

### Example 4

### Battery Production and Cycle Testing

### Production of Cathode

Lithium cobaltate (CELLSEED C5, manufactured by Nippon Chemical Industrial Co., Ltd.), carbon nanotubes (CNT, manufactured by Cnano Technology Limited), and PVDF (KF#7300, manufactured by Kureha Corporation) in a mass ratio of 97.5:1:1.5 were mixed with N-methyl-2-pyrrolidone, to create a slurry with a 65 mass% solid content concentration. Aluminum foil was coated with this slurry using a 120 µm spacer, and it was then dried for 3 h at 120°C. It was then pressed, to produce a cathode having a bulk density of 3.6 g/cm³ and a basis weight of 97 g/m².

### Production of Anode

Shanghai Shanshan (graphite, manufactured by Shanghai Shanshan Technology Co., Ltd.), a conductive agent (Super P, manufactured by TIMCAL Graphite & Carbon, Ltd.), SBR (styrene-butadiene rubber latex, BM-400, manufactured by Zeon Corporation), and CMC (carboxymethyl cellulose, Cellogen 4H, manufactured by Daiichi Kogyo Seiyaku Co., Ltd.) in a mass ratio of 96:2:1:1 were mixed with water, to create a slurry with a 59 mass% solid content concentration. Copper foil was coated with this slurry using a 70 µm spacer, and it was then dried for 3 h at 120°C. It was then pressed, to produce a cathode having a bulk density of 1.5 g/cm³ and a basis weight of 41 g/m².

The cathode and the anode were bonded via the coated separator obtained in any one of Examples 1 to 3, and an electrolyte solution (ethylene carbonate/ethyl methyl carbonate (volume ratio) = 3/7, LiPF₆: 1.2 M, vinylene carbonate: 1 mass%) was made to penetrate in, and then it was sealed by vacuum degassing in an aluminum pouch using a vacuum sealer, and a laminated cell was obtained.

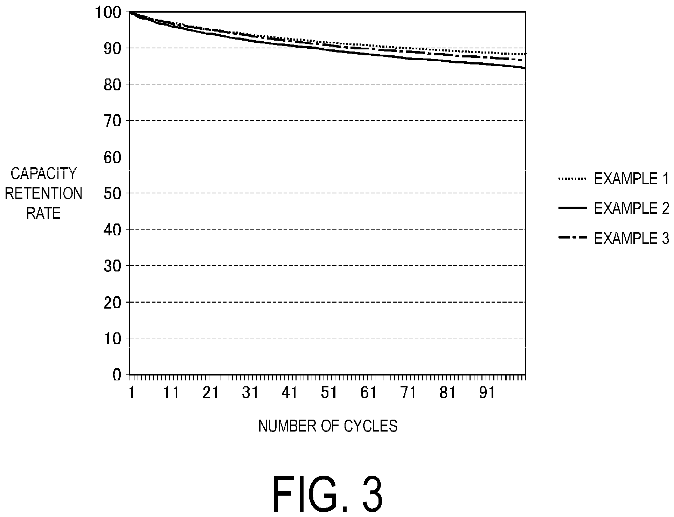

A first charging and discharging cycle consisting of constant current constant voltage charging at 0.1 C and 4.2 V and cut-off constant current discharging at 0.1 C and 3 V was performed three times, and then a second charging and discharging cycle consisting of constant current constant voltage charging at 1 C and 4.2 V and cut-off constant current discharging at 1 C and 3 V was performed 100 times, and the discharge capacity retention rate at 1 C was plotted. Results are shown in FIG. 3. Note that the discharge capacity of the first cycle in the second charging and discharging cycle was taken as 100%.

### Evaluation

From the cycle test results it was found that the non-aqueous electrolyte secondary batteries obtained using separators coated with the aqueous latex according to the present invention operated as batteries without problems.

## Claims

1. An intermediate layer, provided in a structure for non-aqueous electrolyte secondary batteries having a cathode, an anode, and a separator laminated between the cathode and the anode,
the intermediate layer being provided in at least one of between the cathode and the separator and between the anode and the separator,
the intermediate layer being formed from an aqueous latex, the aqueous latex comprising polymer particles dispersed in water,
the polymer particles containing a copolymer comprising a structural unit derived from an unsaturated dibasic acid, and/or a structural unit derived from an unsaturated dibasic acid monoester, and a structural unit derived from a vinylidene fluoride-based monomer,
wherein a ratio A_{1740 cm-1}/A_{3020 cm-1} of an absorbance A_{1740 cm-1} of an infrared absorption spectrum at 1740 cm⁻¹ and an absorbance A_{3020 cm-1} of an infrared absorption spectrum at 3020 cm⁻¹ of the polymer particles being not less than 0.10, and wherein
the intermediate layer is configured such that a plurality of polymer particles are bonded together either directly or via water-soluble polymer.

2. The intermediate layer according to claim 1, wherein an average particle size of the polymer particles of the aqueous latex is not less than 50 nm and not greater than 700 nm.

3. The intermediate layer according to claim 1 or claim 2, wherein the polymer particles of the aqueous latex are produced by emulsion polymerization.

4. A separator/intermediate layer laminate, wherein the intermediate layer according to claim 1 is provided on at least one main surface of the separator.

5. A structure for non-aqueous electrolyte secondary batteries comprising the separator/intermediate layer laminate according to claim 4.

## Patentansprüche

1. Zwischenschicht, bereitgestellt in einer Struktur für Akkumulatoren mit nichtwässrigem Elektrolyten mit einer Kathode, einer Anode und einem Separator, der zwischen der Kathode und der Anode laminiert ist,
wobei die Zwischenschicht in mindestens einem von zwischen der Kathode und dem Separator und zwischen der Anode und dem Separator bereitgestellt ist,
wobei die Zwischenschicht aus einem wässrigen Latex gebildet ist, wobei der wässrige Latex in Wasser dispergierte Polymerpartikel umfasst,
wobei die Polymerpartikel ein Copolymer, das eine Struktureinheit, abgeleitet von einer ungesättigten zweibasigen Säure, und/oder eine Struktureinheit, abgeleitet von einem ungesättigten zweibasigen Säuremonoester und eine Struktureinheit, abgeleitet von einem vinylidenfluoridbasierten Monomer, enthält,
wobei ein Verhältnis A_{1740 cm-1}/A_{3020 cm-1} einer Extinktion A_{1740 cm-1} eines Infrarotabsorptionsspektrums bei 1740 cm⁻¹ und eine Extinktion A_{3020 cm-1} eines Infrarotabsorptionsspektrums bei 3020 cm⁻¹ der Polymerpartikel nicht weniger als 0,10 beträgt, und wobei
die Zwischenschicht derart konfiguriert ist, dass eine Vielzahl von Polymerpartikeln entweder direkt oder über wasserlösliches Polymer miteinander verbunden sind.

2. Zwischenschicht nach Anspruch 1, wobei eine mittlere Partikelgröße der Polymerpartikel des wässrigen Latex nicht kleiner als 50 nm und nicht größer als 700 nm ist.

3. Zwischenschicht nach Anspruch 1 oder Anspruch 2, wobei die Polymerpartikel des wässrigen Latex durch Emulsionspolymerisation hergestellt werden.

4. Separator/Zwischenschichtlaminat, wobei die Zwischenschicht nach Anspruch 1 auf mindestens einer Hauptoberfläche des Separators bereitgestellt ist.

5. Struktur für Akkumulatoren mit nichtwässrigem Elektrolyt, umfassend das Separator/Zwischenschichtlaminat nach Anspruch 4.

## Revendications

1. Couche intermédiaire, fournie dans une structure pour des batteries secondaires à électrolyte non aqueux ayant une cathode, une anode et un séparateur stratifié entre la cathode et l'anode,
la couche intermédiaire étant fournie dans au moins l'un parmi entre la cathode et le séparateur et entre l'anode et le séparateur,
la couche intermédiaire étant formée à partir d'un latex aqueux, le latex aqueux comprenant des particules polymères dispersées dans de l'eau,
les particules polymères contenant un copolymère comprenant un motif structural dérivé d'un acide dibasique insaturé, et/ou un motif structural dérivé d'un monoester d'acide dibasique insaturé, et un motif structural dérivé d'un monomère à base de fluorure de vinylidène,
dans laquelle un rapport A1740 _{cm-1}/A_{3020 cm-1} d'une absorbance A_{1740 cm-1} d'un spectre d'absorption infrarouge à 1740 cm⁻¹ et d'une absorbance A_{3020 cm-1} d'un spectre d'absorption infrarouge à 3020 cm⁻¹ des particules polymères n'est pas inférieur à 0,10, et dans laquelle
la couche intermédiaire est configurée de telle sorte qu'une pluralité de particules polymères sont liées les unes aux autres soit directement soit par l'intermédiaire d'un polymère hydrosoluble.

2. Couche intermédiaire selon la revendication 1, dans laquelle une taille moyenne de particules des particules polymères du latex aqueux n'est pas inférieure à 50 nm et pas supérieure à 700 nm.

3. Couche intermédiaire selon la revendication 1 ou la revendication 2, dans laquelle les particules polymères du latex aqueux sont produites par polymérisation en émulsion.

4. Stratifié séparateur/couche intermédiaire, dans lequel la couche intermédiaire selon la revendication 1 est fournie sur au moins une surface principale du séparateur.

5. Structure pour des batteries secondaires à électrolyte non aqueux comprenant le stratifié séparateur/couche intermédiaire selon la revendication 4.
